# EUROPEAN PATENT APPLICATION

(11) **EP 4 212 026 A1**
(43) Date of publication of application: **19.07.2023**
(21) Application number: 21856251.0
(22) Date of filing: 12.08.2021
(51) Int. Cl.: A23L 33/10, A23L 33/125, A23L 33/175, A23L 33/15, A23L 29/00, A23L 33/16

(54) **PROTEIN FOOD COMPOSITION HAVING ULTRA-LOW CALORIES AND HIGH BIOABSORPTION RATE AND METHOD FOR PROVIDING DIET INFORMATION USING SAME**

(30) Priority: 14.08.2020 KR 20200102673; 11.08.2021 KR 20210105928
(71) Applicant: Seoul National University Hospital, Seoul 03080 (KR)
(72) Inventor: KIM, Ju Young, Seongnam-si, Gyeonggi-do 13600 (KR); KIM, Sohye, Seoul 06096 (KR)
(74) Representative: V.O.
(86) International application number: PCT/KR2021/010708
(87) International publication number: WO 2022/035245

(57) **Abstract**

The present invention relates to a protein food composition having low calories and a high bioabsorption rate, and to a method for providing diet information using same. The food composition according to one aspect of the present invention contains a protein having a high bioabsorption rate while having low calories, and contains a protein in an amount in a specific range, and thus enables a nutritionally balanced diet that can also prevent muscle loss, which is one of adverse side effects of weight loss. Accordingly, when ingesting the food composition according to the method of providing diet information according to one aspect of the present invention, obese patients who need weight control, including patients suffering from obesity, metabolic syndrome, non-alcoholic steatohepatitis, knee osteoarthritis, and diabetes can lose weight while minimizing adverse side effects, such as muscle loss and changes in blood pressure.

## Description

### [Technical Field]

The present application claims priority to Korean Patent Application Nos. 10-2020-0102673, filed August 14, 2020 and 10-2021-0105928, filed August 11, 2021, the entire contents of which is incorporated herein for all purposes by this reference.

The present specification discloses a protein food composition having ultra-low calorie and high bioabsorption rate and a method for providing diet information using the same.

### [Background Art]

As for one of the tools in weight reduction program, meal replacement shakes have been widely used since the past. A meal replacement therapy, although widely used as part of a weight loss program, is not generally recommended in hospitals or academic societies, but in reality, patients or consumers who want to lose weight have often taken meal replacement shakes and the like.

In a systematic literature review on effect of weight loss using meal replacements, Astbury et al. confirmed that the diet using the meal replacement showed a difference of -1.44 kg compared to other diets, the diet using the meal replacement together with other support tools showed a difference of -2.22kg compared to the diet used together with a support program, the diet using the meal replacement showed a significant difference of -3.87kg compared to the diet without supplementary support tools. Comparing the case of adding high-level support such as customized counseling for patients at 2-week intervals with a normal diet, the result difference was -6.13kg, and it was confirmed that the effect lasted up to 1 year. Therefore, the meal replacement therapy has been found to be one of the useful methods of weight loss (Astbury et al. Obes Rev. 2019 Apr;20(4):569-587).

Very-low calorie diet (VLCD) program has not been generally recommended in the guidelines of the Korean obesity society, but according to a recent systematic literature review, participants with VLCD lost more than -3.9 kg of their weight compared with a general weight loss behavior modification program, and the difference was -1.4 kg even at 24 months, and a significant difference of -1.3 kg was maintained even at 38 to 60 months. Thus, the efficacy of the VLCD was significanly better than any other weight loss program. Serious adverse events were not observed more than generally guided low-calorie diet and most adverse events were mild and transient, so VLCD is generally safe, acceptable with good outcomes. (Parretti et al. Obes Rev. 2016 Mar;17(3):225-34.). In addition, according to another systematic literature review, VLCD program can cause weight loss of about 15 % or more even in obese patients with type 2 diabetes and helps to control blood sugar and improve body fat in the long term, so it can be considered as a safe option. (Rehackova et al. Diabet Med. 2016 May;33(5):580-91, Leslie et al. Int J Obes (Lond). 2017 Jan; 41(1): 96-101, Sellahewa et al. Curr Diabetes Rev. 2017;13(1):35-46).

In addition, diet program for weight reduction are very diverse, but the most important factor is known as the reduction of total energy intake. (Thom G et al. Gastroenterology. 2017 May; 152(7): 1739-1751). In particular, restricting total calorie intake with a VLCD of 600 to 800 kcal per day is recognized as the significantly meaningful for both weight loss and weight maintenance.

On the other hand, there is a meta-analysis study that among the composition of the three major nutrients, a high-protein low-fat diet has a greater reduction in fat and weight than a standard low-protein diet, preserves lean body mass, and prevents a decrease in basal metabolic rate (Wycherley et al. Am J Clin Nutr. 2012 Dec;96(6): 1281-98.). Also, in terms of weight loss, there is a study that supplementing a high-protein diet and performing strength training prevented muscle loss in the elderly (Verreijen et al. Am J Clin Nutr. 2015 Feb;101(2):279-86). There are systematic literature reviews that found that high-protein, low-glycemic index foods helped maintain weight loss more effectively (Larsen TM et al. N Engl J Med. 2010 Nov 25;363(22):2102-13. Johansson et al. Am J Clin Nutr. 2014 Jan;99(1): 14-23.).

Accordingly, the present inventors have developed an protein supplemented very-low-calorie program to prevent muscle loss by restricting calories with a VLCD including protein with increased bioabsorption, and prescribing a protein content of 1 to 1.5 g per 1 kg of an ideal body weight, and invented the present invention by conducting research to provide meal replacements as a medical food that could be prescribed in the initial weight loss phase of obese patients through the development of alternative meals.

### [Disclosure]

### [Technical Problem]

In one aspect, an object of the present invention is to provide a food composition containing protein with high bioabsorption rate

In another aspect, an object of the present invention is to provide a food composition containing protein with very-low calorie status to prevent muscle loss.

In still another aspect, an object of the present invention is to provide a method for providing diet information on the food composition to a subject.

### [Technical Solution]

In one aspect, the present invention provides a food composition with a very-low calorie and protein with high bioabsorption rate provided to a subject, wherein the food composition is an very-low calorie food that provides 3 to 15 kcal per day per 1 kg of the subject's ideal body weight, and has a carbohydrate content of 0.13 to 0.3 g per 1 kg of the ideal body weight, a protein content of 0.76 to 1.725 g per 1 kg of the ideal body weight, a lipid content of 0.03 to 0.075 g per 1 kg of the ideal body weight, and the protein contains 11 or more amino acids while containing an essential amino acid ratio of 50 % or more based on the total amino acid content, and branched amino acids, and the food composition contains vitamin D or omega 3 as a muscle loss prevention nutrient.

In another aspect, the present invention provides a method for providing diet information, including providing information on the food composition to a subject, wherein the information is that the caloric content of the composition provided per day per 1 kg of the subject's ideal body weight is 3 to 15 kcal.

In still another aspect, the present invention provides a low-calorie protein food composition which is provided to a subject, wherein the food composition is packaged in one package unit, the one package is composed of 20 to 400 kcal, and the food composition contains 1.5 to 6 % by weight of carbohydrate, 15 to 66 % by weight of protein, and 1 to 2 % by weight of fat based on a total weight of the composition.

In still another aspect, the present invention provides a method for providing diet information including the step of providing information on the food composition to a subject.

### [Advantageous Effects]

The food composition according to one aspect of the present invention includes a specific range of protein with high bioabsorption rate while maintaining very-low calorie to enable a nutritionally balanced diet while preventing muscle loss. Therefore, patients with obesity and at risk of muscle loss such as old age or type 2 diabetes will get benefits with this formula to achieve significant weight loss while minimizing their muscle loss.

### [Description of Drawings]

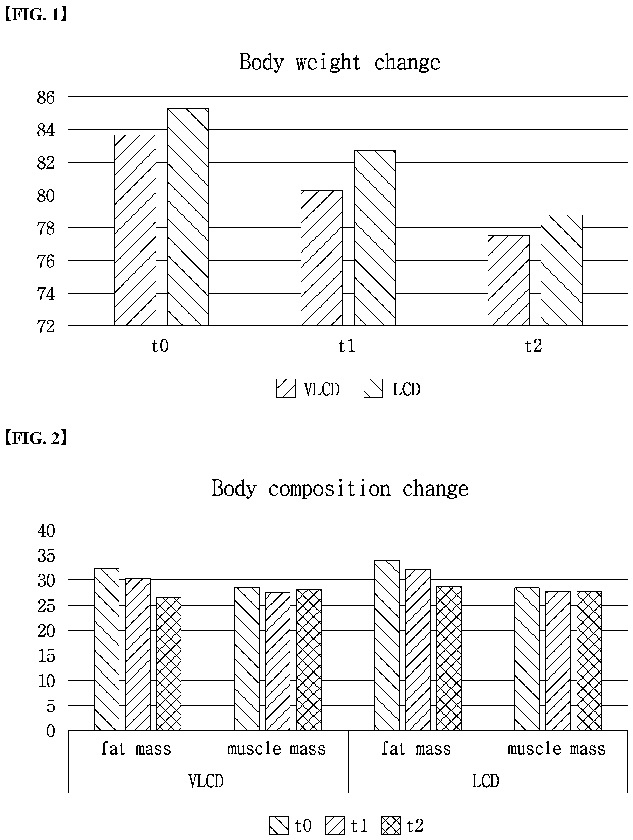

FIG. 1 is a graph showing a weight change over time in a control group (LCD) and a case in which a food composition (VLCD) according to an embodiment of the present invention is ingested according to a method for providing diet information according to an embodiment of the present invention. In FIG. 1, t0 represents before providing the food composition, t1 represents the first 2 weeks after providing the food composition, and t2 represents the next 6 weeks.
FIG. 2 is a graph showing a change in fat mass and muscle mass over time in a control group (LCD) and a case in which a food composition (VLCD) according to an embodiment of the present invention is ingested according to a method for providing diet information according to an embodiment of the present invention. In FIG. 1, t0 represents before providing the food composition, t1 represents the first 2 weeks after providing the food composition, and t2 represents the next 6 weeks.

### [Mode for Invention]

Hereinafter, the present invention will be described in detail.

In one aspect of the present invention, an "ideal body weight" means a weight that is appropriate for the height of a subject and is considered the most ideal for health, and the ideal body weight includes a weight derived in consideration of future health conditions.

In one aspect, the present invention provides a food composition with a very-low calorie and protein with high bioabsorption rate provided to a subject, wherein the food composition is packaged in one package unit, one package is composed of 20 to 400 kcal, and the food composition contains 1.5 to 6 % by weight of carbohydrate, 15 to 66 % by weight of protein, and 1 to 2 % by weight of fat based on the total weight of the composition.

In one aspect, the present invention provides a food composition with a very-low calorie and protein with high bioabsorption rate provided to a subject, wherein the food composition is an very-low calorie food that provides 3 to 15 kcal per day per 1 kg of the subject's ideal body weight, and has a carbohydrate content of 0.13 to 0.3 g per 1 kg of the ideal body weight, a protein content of 0.76 to 1.725 g per 1 kg of the ideal body weight, a lipid content of 0.03 to 0.075 g per 1 kg of the ideal body weight, and the protein contains 11 or more amino acids while containing an essential amino acid ratio of 40 % or more based on the total amino acid content, and branched amino acids, and the food composition contains vitamin D or omega 3 as a muscle loss prevention nutrient.

The food composition according to one aspect of the present invention may be a low-calorie or very-low-calorie diet in which an amount of calories provided per day is 3 to 15 kcal per 1 kg of an ideal body weight. Specifically, the amount of calories provided per day by the food composition according to one aspect of the present invention may be 3 kcal or more, 3.2 kcal or more, 3.4 kcal or more, 3.6 kcal or more, 3.8 kcal or more, 4 kcal or more, 4.2 kcal or more, 4.4 kcal or more, 4.6 kcal or more, 4.8 kcal or more, 5 kcal or more, 5.2 kcal or more, 5.4 kcal or more, 5.6 kcal or more, 5.8 kcal or more, 5.85 kcal or more, 6 kcal or more, 6.2 kcal or more, 6.4 kcal or more, 6.6 kcal or more, 6.8 kcal or more, 7 kcal or more, 7.2 kcal or more, 7.4 kcal or more, 7.6 kcal or more, 7.8 kcal or more, 8 kcal or more, 8.2 kcal or more, 8.4 kcal or more, 8.6 kcal or more, 8.8 kcal or more, 9 kcal or more, 9.1 kcal or more, 9.2 kcal or more, 9.3 kcal or more, 9.4 kcal or more, 9.5 kcal or more, 9.6 kcal or more, 9.7 kcal or more, 9.8 kcal or more, 9.9 kcal or more, 10 kcal or more, 10.2 kcal or more, 10.4 kcal or more, 10.6 kcal or more, 10.8 kcal or more, 11 kcal or more, 11.5 kcal or more, 12 kcal or more, 12.5 kcal or more, 13 kcal or more, 13.5 kcal or more, 14 kcal or more, or 14.5 kcal or more, or 15 kcal or less, 14.8 kcal or less, 14.6 kcal or less, 14.4 kcal or less, 14.2 kcal or less, 14 kcal or less, 13.8 kcal or less, 13.6 kcal or less, 13.4 kcal or less, 13.2 kcal or less, 13 kcal or less, 12.8 kcal or less, 12.6 kcal or less, 12.4 kcal or less, 12.2 kcal or less, 12 kcal or less, 11.8 kcal or less, 11.6 kcal or less, 11.4 kcal or less, 11.2 kcal or less, 11 kcal or less, 10.9 kcal or less, 10.8 kcal or less, 10.7 kcal or less, 10.6 kcal or less, 10.5 kcal or less, 10.4 kcal or less, 10.3 kcal or less, 10.2 kcal or less, 10.1 kcal or less, 10 kcal or less, 9.8 kcal or less, 9.6 kcal or less, 9.4 kcal or less, 9.2 kcal or less, 9 kcal or less, 8.5 kcal or less, 8 kcal or less, 7.5 kcal or less, 7 kcal or less, 6.5 kcal or less, 6 kcal or less, 5.85 kcal or less, 5.5 kcal or less, 5 kcal or less, 4.5 kcal or less, 4 kcal or less, or 3.5 kcal or less per 1 kg of an ideal body weight. The calorie may be more specifically 4 to 12.5 kcal, even more particularly 5 to 11 kcal. However, the calorie is not limited thereto as long as it is a calorie capable of achieving a weight loss effect without significantly affecting the health condition of the subject taking the food composition without causing muscle loss.

The food composition according to one aspect of the present invention may be a food composition with high bioabsorption rate, specifically, a food composition containing a protein with high bioabsorption rate, and more specifically, a food composition containing a type of protein with high bioabsorption rate, a protein in a specific range to increase bioabsorption rate, or a specific type of amino acid constituting protein or amino acid content in a specific range for each type to increase bioabsorption rate. If a diet that restricts the amount of food consumed for weight control or consumes low-calorie or very-low-calorie foods or alternative meals is applied, muscle loss may occur. In this case, the basal metabolic rate decreases to maintain the reduced weight, which may make it difficult to maintain the reduced weight. However, the food composition according to one aspect of the present invention can prevent muscle loss as much as possible despite weight loss by including a protein with a high bioabsorption rate.

The food composition according to one aspect of the present invention may contain 0.13 to 0.3 g of carbohydrate per 1 kg of an ideal body weight. Specifically, the food composition may contain 0.13 g or more, 0.14 g or more, 0.15 g or more, 0.16 g or more, 0.17 g or more, 0.18 g or more, 0.19 g or more, 0.2 g or more, 0.21 g or more, 0.22 g or more, 0.23 g or more, 0.24 g or more, 0.25 g or more, 0.26 g or more, 0.27 g or more, 0.28 g or more, or 0.29 g or more, or 0.3 g or less, 0.29 g or less, 0.28 g or less, 0.27 g or less, 0.26 g or less, 0.25 g or less, 0.24 g or less, 0.23 g or less, 0.22 g or less, 0.21 g or less, 0.2 g or less. 0.19 g or less, 0.18 g or less, 0.17 g or less, 0.16 g or less, 0.15 g or less, or 0.14 g or less of carbohydrate per 1 kg of an ideal body weight. More specifically, the food composition may contain 0.15 to 0.25 g of carbohydrate per 1 kg of an ideal body weight. However, this content is not limited thereto as long as it is nutritionally balanced and can achieve a weight loss effect without significantly affecting the health of a subject taking the food composition.

The food composition according to one aspect of the present invention may contain 0.76 to 1.725 g of protein per 1 kg of an ideal body weight. Specifically, the food composition may contain 0.76 g or more, 0.8 g or more, 0.85 g or more, 0.9 g or more, 0.91 g or more, 0.92 g or more, 0.93 g or more, 0.94 g or more, 0.95 g or more, 0.96 g or more, 0.97 g or more, 0.1 g or more, 1.01 g or more, 1.02 g or more, 1.03 g or more, 1.04 g or more, 1.05 g or more, 1.06 g or more, 1.07 g or more, 1.08 g or more, 1.09 g or more, 1.1 g or more, 1.11 g or more, 1.12 g or more, 1.13 g or more, 1.14 g or more, 1.15 g or more, 1.16 g or more, 1.18 g or more, 1.2 g or more, 1.25 g or more, 1.3 g or more, 1.35 g or more, 1.4 g or more, 1.5 g or more, 1.6 g or more, 1.7 g or more, 1.71 g or more, or 1.72 g or more, or 1.725 g or less, 1.72 g or less, 1.7 g or less, 1.68 g or less, 1.66 g or less, 1.64 g or less, 1.62 g or less, 1.6 g or less, 1.58 g or less, 1.56 g or less, 1.54 g or less, 1.52 g or less, 1.5 g or less, 1.48 g or less, 1.46 g or less, 1.44 g or less, 1.42 g or less, 1.4 g or less, 1.38 g or less, 1.36 g or less, 1.34 g or less, 1.32 g or less, 1.3 g or less, 1.29 g or less, 1.28 g or less, 1.27 g or less, 1.26 g or less, 1.25 g or less, 1.24 g or less, 1.23 g or less, 1.22 g or less, 1.21 g or less, 1.2 g or less, 1.19 g or less, 1.18 g or less, 1.17 g or less, 1.16 g or less, 1.15 g or less, 1.14 g or less, 1.13 g or less, 1.12 g or less, 1.11 g or less, 1.1 g or less, 1 g or less, 0.9 g or less, or 0.8 g or less protein per 1 kg of an ideal body weight. More specifically, the food composition may contain 0.9 to 1.3 g of protein per 1 kg of an ideal body weight. This content is not limited thereto as long as it is nutritionally balanced and can achieve a weight loss effect while reducing muscle loss without significantly affecting the health of a subject taking the food composition.

The food composition according to one aspect of the present invention may contain 0.03 to 0.075 g of lipid per 1 kg of an ideal body weight. Specifically, the food composition may contain 0.03 g or more, 0.032 g or more, 0.034 g or more, 0.036 g or more, 0.038 g or more, 0.04 g or more, 0.041 g or more, 0.042 g or more, 0.043 g or more, 0.044 g or more, 0.045 g or more, 0.046 g or more, 0.047 g or more, 0.048 g or more, 0.049 g or more, 0.05 g or more, 0.055 g or more, 0.06 g or more, 0.065 g or more, or 0.07 g or more, 0.075 g or less, 0.07 g or less, 0.068 g or less, 0.066 g or less, 0.064 g or less, 0.062 g or less, 0.06 g or less, 0.059 g or less, 0.058 g or less, 0.057 g or less, 0.056 g or less, 0.055 g or less, 0.054 g or less, 0.053 g or less, 0.052 g or less, 0.051 g or less, 0.05 g or less, 0.045 g or less, 0.04 g or less, or 0.035 g or less per 1 kg of an ideal body weight. More specifically, the food composition may contain 0.045 to 0.055 g of lipid per 1 kg of an ideal body weight. This content is not limited thereto as long as it is nutritionally balanced and can achieve a weight loss effect without significantly affecting the health of a subject taking the food composition.

The food composition according to one aspect of the present invention may include a protein containing 11 or more amino acids. Specifically, the food composition may contain a protein containing 11 or more amino acids selected from a group consisting of leucine, lysine, methionine, valine, isoleucine, threonine, tryptophan, histidine, phenylalanine, cystine and tyrosine; an isomer thereof; a pharmaceutically or food-acceptable salt thereof; a hydrate thereof; or a solvate thereof.

In one aspect of the present invention, "pharmaceutically acceptable" means that it is recognized that one can be used for an animal, more specifically humans by avoiding significant toxic effects when being used in a common medicinal dosage as being capable of being approved or as being approved by the government or a regulatory agency equivalent thereto or as being enumerated in the pharmacopeia or as being described in other general pharmacopeias.

In one aspect of the present invention, "food-acceptable" means that it is recognized that one can be used for an animal, more specifically humans by avoiding significant toxic effects when being used in a common food ingredient as being capable of being approved or as being approved by the government or a regulatory agency equivalent thereto or as being enumerated in the food-related literatures.

In one aspect of the present invention, a "pharmaceutically acceptable salt" refers to a salt according to an aspect of the present invention which is pharmaceutically acceptable and has a desired pharmacological activity of its parent compound. The salt may include: (1) an acid addition salt formed from an inorganic acid such as hydrochloric acid, hydrobromic acid, sulfuric acid, nitric acid, phosphoric acid, etc. or an organic acid such as acetic acid, propionic acid, hexanoic acid, cyclopentanepropionic acid, glycolic acid, pyruvic acid, lactic acid, malonic acid, succinic acid, malic acid, maleic acid, fumaric acid, tartaric acid, citric acid, benzoic acid, 3-(4-hydroxybenzoyl)benzoic acid, cinnamic acid, mandelic acid, methanesulfonic acid, ethanesulfonic acid, 1,2-ethane-disulfonic acid, 2-hydroxyethanesulfonic acid, benzenesulfonic acid, 4-chlorobenzenesulfonic acid, 2-naphthalenesulfonic acid, 4-toluenesulfonic acid, camphorsulfonic acid, 4-methylbicyclo[2,2,2]-oct-2-ene-1-carboxylic acid, glucoheptonic acid, 3-phenylpropionic acid, trimethylacetic acid, tert-butylacetic acid, lauryl sulfuric acid, gluconic acid, glutamic acid, hydroxynaphthoic acid, salicylic acid, stearic acid or muconic acid; or (2) a salt formed when an acidic proton present in the parent compound is substituted.

In one aspect of the present invention, a "food-acceptable salt" refers to a salt according to an aspect of the present invention which is food-acceptable and has a desired activity of its parent compound.

In one aspect of the present invention, an "isomer" includes not only optical isomers (e.g., essentially pure enantiomers, essentially pure diastereomers or mixtures thereof) but also conformation isomers (i.e., isomers which are different only in angles of one or more chemical bond), position isomers (especially, tautomers) or geometric isomers (e.g., cis-trans isomers).

In one aspect of the present invention, a "hydrate" means a compound to which water is bound. The term is used in a broad concept, including an inclusion compound which lacks chemical bonding between water and the compound.

In one aspect of the present invention, a "solvate" means a higher-order compound formed between a solute molecule or ion and a solvent molecule or ion.

A food composition according to one aspect of the present invention may include a protein containing an essential amino acid ratio of 50 % or more based on the total amino acid content. Specifically, the essential amino acid according to one aspect of the present invention may be at least one selected from the group consisting of leucine, lysine, methionine, valine, isoleucine, threonine, tryptophan, and phenylalanine; an isomer thereof; a pharmaceutically or food-acceptable salt thereof; a hydrate thereof; or a solvate thereof, but is not limited thereto as long as it is an essential amino acid capable of achieving a weight loss effect while reducing muscle loss without significantly affecting the health of a subject taking the food composition. In addition, a food composition according to an aspect of the present invention may include a protein containing an essential amino acid; an isomer thereof; a pharmaceutically or food-acceptable salt thereof; a hydrate thereof; or a solvate thereof of 50 % or more, 55 % or more, 60 % or more, 65 % or more, 70 % or more, 72 % or more, 74 % or more, 76 % or more, 78 % or more, 80 % or more, 85 % or more, 90 % or more, or 95 % or more, based on the total amino acid content. This essential amino acid content is not limited thereto as long as it is nutritionally balanced and can achieve a weight loss effect while reducing muscle loss without significantly affecting the health of a subject taking the food composition.

A food composition according to one aspect of the present invention may include a protein containing a branched amino acid; an isomer thereof; a pharmaceutically or food-acceptable salt thereof; a hydrate thereof; or a solvate thereof. Specifically, the branched amino acid according to one aspect of the present invention may be one or more selected from the group consisting of leucine, valine, and isoleucine, but it is not limited thereto as long as it can achieve a weight loss effect while reducing muscle loss without significantly affecting the health of a subject taking the food composition. In addition, a food composition according to one aspect of the present invention may include a protein containing a branched amino acid; an isomer thereof; a pharmaceutically or food-acceptable salt thereof; a hydrate thereof; or a solvate thereof of 25 to 65 % based on the total amino acid content. Specifically, the protein according to one aspect of the present invention may contain a branched amino acid; an isomer thereof; a pharmaceutically or food-acceptable salt thereof; a hydrate thereof; or a solvate thereof of 25 % or more, 30 % or more, 35 % or more, 40 % or more, 45 % or more, 50 % or more, 55 % or more, or 60 % or more, or 65 % or less, 60 % or less, 55 % or less, 50 % or less, 45 % or less, 40 % or less, 35 % or less, or 30 % or less, based on the total amino acid content. This content is not limited thereto as long as it is nutritionally balanced and can achieve a weight loss effect while reducing muscle loss without significantly affecting the health of a subject taking the food composition.

A food composition according to one aspect of the present invention may include a muscle loss prevention nutrient, and specifically, the muscle loss prevention nutrient may be one or more selected from the group consisting of vitamin D, omega 3 and beta hydroxymethybutyrate (HMB); an isomer thereof; a pharmaceutically or food-acceptable salt thereof; a hydrate thereof; or a solvate thereof, more specifically, the muscle loss prevention nutrient may be one or more selected from the group consisting of vitamin D and beta hydroxymethylbutyrate (HMB); an isomer thereof; a pharmaceutically or food-acceptable salt thereof; a hydrate thereof; or a solvate thereof, but it is not limited thereto as long as it is the muscle loss prevention nutrient that can achieve a weight loss effect while reducing muscle loss of a subject taking the food composition.

The food composition according to one aspect of the present invention may include a micronutrient, and specifically, the micronutrient may be one or more selected from the group consisting of a dietary fiber; and a mixture of other vitamins and minerals; an isomer thereof; a pharmaceutically or food-acceptable salt thereof; a hydrate thereof; or a solvate thereof, and more specifically, the mixture of other vitamins and minerals may be a mixture of one or more vitamins selected from the group consisting of vitamin C, vitamin E, nicotinic acid amide, vitamin B1, vitamin B6 and vitamin B12; and one or more minerals selected from the group consisting of zinc oxide and folic acid, but the micronutrient is not limited thereto as long as it can achieve a weight loss effect without significantly affecting the health of a subject taking the food composition.

A very-low calorie diet according to one aspect of the present invention may be divided and provided 2 to 8 times a day. Specifically, the very-low calorie diet may be divided and provided 2 or more times, 3 or more times, 4 or more times, 5 or more times, 6 or more times, or 7 or more times a day, or 8 times or less, 7 times or less, 6 times or less, 5 times or less, 4 times or less, or 3 times or less a day, and more specifically, the very-low calorie diet may be divided and provided 4 to 5 times a day. Since the very-low calorie diet according to one aspect of the present invention is a low calorie diet that provides 3 to 15 kcal per day per 1 kg of the subject's ideal body weight, the very-low calorie diet may be provided several times under the condition that the daily calorie range is satisfied, and may vary according to the age, gender, weight, health condition, type and severity of disease, or lifestyle of a subject or prescriber's determination and is not limited to the above range.

A food composition according to one aspect of the present invention may be packaged in one package unit, one package may be composed of 20 to 400 kcal. Specifically, one package may be composed of 20 kcal or more, 30 kcal or more, 40 kcal or more, 50 kcal or more, 60 kcal or more, 70 kcal or more, 80 kcal or more, 90 kcal or more, 100 kcal or more, 110 kcal or more, 116 kcal or more, 120 kcal or more, 130 kcal or more, 140 kcal or more, 150 kcal or more, 160 kcal or more, 170 kcal or more, 180 kcal or more, 190 kcal or more, 200 kcal or more, 210 kcal or more, 220 kcal or more, 230 kcal or more, 240 kcal or more, 250 kcal or more, 260 kcal or more, 270 kcal or more, 280 kcal or more, 290 kcal or more, 300 kcal or more, 310 kcal or more, 320 kcal or more, 330 kcal or more, 340 kcal or more, 350 kcal or more, 360 kcal or more, 370 kcal or more, 380 kcal or more, or 390 kcal or more, or 400 kcal or less, 390 kcal or less, 380 kcal or less, 370 kcal or less, 360 kcal or less, 350 kcal or less, 340 kcal or less, 330 kcal or less, 320 kcal or less, 310 kcal or less, 300 kcal or less, 290 kcal or less, 280 kcal or less, 270 kcal or less, 260 kcal or less, 250 kcal or less, 240 kcal or less, 230 kcal or less, 220 kcal or less, 210 kcal or less, 200 kcal or less, 190 kcal or less, 180 kcal or less, 170 kcal or less, 160 kcal or less, 150 kcal or less, 140 kcal or less, 130 kcal or less, 120 kcal or less, 116 kcal or less, 110 kcal or less, 100 kcal or less, 90 kcal or less, 80 kcal or less, 70 kcal or less, 60 kcal or less, 50 kcal or less, 40 kcal or less, or 30 kcal or less. More specifically, one package may be composed of 100 to 200 kcal. Since a food composition according to one aspect of the present invention is an very-low calorie food that provides 3 to 15 kcal per day per 1 kg of the subject's ideal body weight, the calories constituting one package of the food composition under the condition that the daily calorie range is satisfied may vary. Specifically, the calories may vary according to the age, gender, weight, health condition, type and severity of disease, or lifestyle of a subject, or a prescriber's determination, but are not limited to the above range.

A food composition according to one aspect of the present invention may be provided in a (1) weight loss phase, and specifically, the food composition may be provided in two or three steps in the (1) weight loss phase, and more specifically the (1) weight loss phase may consist of consecutive first and second periods, or consecutive first, second and third periods.

In the case that the (1) weight loss phase according to one aspect of the present invention consists of consecutive first and second periods, in the first period, three meals a day are provided with the food composition, and in the second period, two meals a day are provided with the food composition, but the period (week) providing the food composition, the number of times of the food composition is provided per day, etc. may vary according to the age, gender, weight, health condition, type and severity of disease, lifestyle of a subject or a prescriber's determination, and are not limited to the above range.

In the case that the (1) weight loss phase according to one aspect of the present invention consists of consecutive first and second periods, the (1) weight loss phase may be a continuous period of time from 3^{rd} week to 32^{nd} week from the start date of providing the food composition. Specifically, the start date of the (1) weight loss phase may be the start date of providing the food composition, and the end date of the (1) weight loss phase may be 3^{rd} week, 4^{th} week, 5^{th} week, 6^{th} week, 7^{th} week, 8^{th} week, 9^{th} week, 10^{th} week, 11^{th} week, 12^{th} week, 13^{th} week, 14^{th} week, 15^{th} week, 16^{th} week, 17^{th} week, 18^{th} week, 19^{th} week, 20^{th} week, 21^{st} week, 22^{nd} week, 23^{rd} week, 24^{th} week, 25^{th} week, 26^{th} week, 27^{th} week, 28^{th} week, 29^{th} week, 30^{th} week, 31^{st} week, or 32^{nd} week, but not limited thereto.

In the case that the (1) weight loss phase according to one aspect of the present invention consists of consecutive first and second periods, the first period may be from 1^{st} week to 12^{th} week from the start date of providing the food composition. Specifically, the start date of the first period may be the start date of providing the food composition, and the end date of the first period may be 1^{st} week, 2^{nd} week, 3^{rd} week, 4^{th} week, 5^{th} week, 6^{th} week, 7^{th} week, 8^{th} week, 9^{th} week, 10^{th} week, 11^{th} week, or 12^{th} week from the start date of providing the food composition, but not limited thereto.

In the case that the (1) weight loss phase according to one aspect of the present invention consists of consecutive first and second periods, the second period may be from the day after the end date of the first period to any one week of 3^{rd} week to 32^{nd} week based on the start date of providing the food composition. Specifically, the start date of the second period may be the day after the end date of the first period, and the end date of the second period may be 3^{rd} week, 4^{th} week, 5^{th} week, 6^{th} week, 7^{th} week, 8^{th} week, 9^{th} week, 10^{th} week, 11^{th} week, 12^{th} week 13^{th} week, 14^{th} week, 15^{th} week, 16^{th} week, 17^{th} week, 18^{th} week, 19^{th} week, 20^{th} week, 21^{st} week, 22^{nd} week, 23^{rd} week, 24^{th} week, 25^{th} week, 26^{th} week, 27^{th} week, 28^{th} week, 29^{th} week, 30^{th} week, 31^{st} week, or 32^{nd} week from the start date of providing the food composition, but not limited thereto.

In the case that the (1) weight loss phase according to one aspect of the present invention consists of consecutive first and second periods, in the second period, the remaining one meal of the day not providing the food composition may be provided so that the total calorie intake per day is 1500 kcal or less and the protein intake per day is 2 g or less per 1 kg of an ideal body weight. Specifically, in the second period, the remaining one meal of the day not providing the food composition may be provided so that the total amount of calories intake per day is to be 1500 kcal or less, 1400 kcal or less, 1300 kcal or less, 1200 kcal or less, 1100 kcal or less, 1000 kcal or less, 900 kcal or less, 800 kcal or less, 700 kcal or less, or 600 kcal or less. In addition, in the (2) weight loss phase, the remaining one meal of the day not providing the food composition may be provided so that the protein intake per day is 2 g or less, 1.9 g or less, 1.8 g or less, 1.7 g or less, 1.6 g or less, 1.5 g or less, 1.4 g or less, 1.3 g or less, 1.2 g or less, 1.1 g or less, 1 g or less, 0.9 g or less, 0.8 g or less, 0.7 g or less, or 0.6 g or less per 1 kg of an ideal body weight.

The food composition according to one aspect of the present invention may be provided in the (1) weight loss phase and (2) weight maintenance phase. In the case that the (1) weight loss phase consists of consecutive first, second and third periods, in the (1) weight loss phase, three meals a day may be provided with the food composition during the first period, two meals a day may be provided with the food composition during the second period, and one meal a day may be provided with the food composition during the third period, but the period (week) providing the food composition, the number of times of the food composition is provided per day, etc. may vary according to the age, gender, weight, health condition, type and severity of disease, lifestyle of a subject or a prescriber's determination, and are not limited to the above range.

In one aspect of the present invention, in the case that the (1) weight loss phase consists of consecutive first, second and third periods, the first period may be until any one week from 2^{nd} week to 12^{th} week from the start date of providing the food composition. Specifically, the start date of the first period may be the start date of providing the food composition, and the end date of the first period may be 2^{nd} week, 3^{rd} week, 4^{th} week, 5^{th} week, 6^{th} week, 7^{th} week, 8^{th} week, 9^{th} week, 10^{th} week, 11^{th} week, or 12^{th} week from the start date of providing the food composition, but not limited thereto.

In one aspect of the present invention, in the case that the (1) weight loss phase consists of consecutive first, second and third periods, the second period may be until any one week from 3^{rd} week to 44^{th} week from the start date of providing the food composition. Specifically, the second period may be from the day after the end date of the first period to any one from 6^{th} week to 44^{th} week, based on the start date of providing the food composition. More specifically, the start date of the second period may be 3^{rd} week, 4^{th} week, 5^{th} week, 6^{th} week, 7^{th} week, 8^{th} week, 9^{th} week, 10^{th} week, 11^{th} week, 12^{th} week, or 13^{th} week from the start date of providing the food composition, and the end date of the second period may be 6^{th} week, 7^{th} week, 8^{th} week, 9^{th} week, 10^{th} week, 11^{th} week, 12^{th} week, 13^{th} week, 14^{th} week, 15^{th} week, 16^{th} week, 17^{th} week, 18^{th} week, 19^{th} week, 20^{th} week, 21^{st} week, 22^{nd} week, 23^{rd} week, 24^{th} week, 25^{th} week, 26^{th} week, 27^{th} week, 28^{th} week, 29^{th} week, 30^{th} week, 31^{st} week, 32^{nd} week, 33^{rd} week, 34^{th} week, 35^{th} week, 36^{th} week, 37^{th} week, 38^{th} week, 39^{th} week, 40^{th} week, 41^{st} week, 42^{nd} week, 43^{rd} week, or 44^{th} week from the start date of providing the food composition, but not limited thereto.

In one aspect of the present invention, in the case that the (1) weight loss phase consists of consecutive first, second and third periods, the third period may be until any one week from 7^{th} week to 48^{th} week from the start date of providing the food composition. Specifically, the third period may be from the day after the end date of the second period to any one from 12^{th} week to 48^{th} week, based on the start date of providing the food composition. More specifically, the start date of the third period may be 7^{th} week, 8^{th} week, 9^{th} week, 10^{th} week, 11^{th} week, 12^{th} week, 13^{th} week, 14^{th} week, 15^{th} week, 16^{th} week, 17^{th} week, 18^{th} week, 19^{th} week, 20^{th} week, 21^{st} week, 22^{nd} week, 23^{rd} week, 24^{th} week, 25^{th} week, 26^{th} week, 27^{th} week, 28^{th} week, 29^{th} week, 30^{th} week, 31^{st} week, 32^{nd} week, 33^{rd} week, 34^{th} week, 35^{th} week, 36^{th} week, 37^{th} week, 38^{th} week, 39^{th} week, 40^{th} week, 41^{st} week, 42^{nd} week, 43^{rd} week, 44^{th} week, or 45^{th} week from the start date of providing the food composition, and the end date of the third period may be 12^{th} week, 13^{th} week, 14^{th} week, 15^{th} week, 16^{th} week, 17^{th} week, 18^{th} week, 19^{th} week, 20^{th} week, 21^{st} week, 22^{nd} week, 23^{rd} week, 24^{th} week, 25^{th} week, 26^{th} week, 27^{th} week, 28^{th} week, 29^{th} week, 30^{th} week, 31^{st} week, 32^{nd} week, 33^{rd} week, 34^{th} week, 35^{th} week, 36^{th} week, 37^{th} week, 38^{th} week, 39^{th} week, 40^{th} week, 41^{st} week, 42^{nd} week, 43^{rd} week, 44^{th} week, 45^{th} week, 46^{th} week, 47^{th} week, or 48^{th} week from the start date of providing the food composition, but not limited thereto.

In one aspect of the present invention, in the case that the (1) weight loss phase consists of consecutive first, second and third periods, the first period, the second period and the third period may be consecutive periods in the order of the first period, the second period, and the third period of the period from 12^{th} week to 48^{th} week from the date of providing the food composition.

According to one aspect of the present invention, in the case that the (1) weight loss phase consists of consecutive first, second and third periods, in the (2) weight maintenance phase, two meals a day may be provided with the food composition for one week per month, and the two meals a day may be provided with the food composition for one week per month at intervals of 1 month, 2 months, 3 months or 4 months during the total period of the (2) weight maintenance phase. In one aspect of the present invention, the (2) weight maintenance phase may be for 1 to 24 months, specifically, the (2) weight maintenance phase may be for 1 month, 2 months, 3 months, 4 months, 5 months, 6 months, 7 months, 8 months, 9 months, 10 months, 11 months, 12 months, 13 months, 14 months, 15 months, 16 months, 17 months, 18 months, 19 months, 20 months, 21 months, 22 months, 23 months or 24 months, but the period (week) providing the food composition, the number of times of the food composition is provided per day, etc. may vary according to the age, gender, weight, health condition, type and severity of disease, lifestyle of a subject or a prescriber's determination, and are not limited to the above range.

In addition, in the case that the (1) weight loss phase consists of consecutive first, second and third periods, if the body weight increases by 2 kg or more in the (2) weight maintenance phase, two meals a day may be provided with the food composition for 2 weeks per month. The two meals a day may be provided with the food composition for 2 weeks per month at intervals of 1 month, 2 months, 3 months or 4 months. Specifically, two meals a day may be provided with the food composition for 2 weeks per month if the body weight increases 2 kg or more, 2.1 kg or more, 2.2 kg or more, 2.3 kg or more, 2.4 kg or more, 2.5 kg or more, 2.6 kg or more, 2.7 kg or more, 2.8 kg or more, 2.9 kg or more, 3 kg or more, 3.1 kg or more, 3.2 kg or more, 3.3 kg or more, 3.4 kg or more, 3.5 kg or more, 3.6 kg or more, 3.7 kg or more, 3.8 kg or more, or 3.9 kg or more. In addition, if the body weight increases by 4 kg or more in the (2) weight maintenance phase, two meals a day may be provided with the food composition for 3 or 4 weeks per month. The two meals a day may be provided with the food composition for 3 or 4 weeks per month at intervals of 1 month, 2 months, 3 months or 4 months. Specifically, two meals a day may be provided with the food composition for 3 or 4 weeks per month if the body weight increases 4 kg or more, 4.1 kg or more, 4.2 kg or more, 4.3 kg or more, 4.4 kg or more, 4.5 kg or more, 4.6 kg or more, 4.7 kg or more, 4.8 kg or more, 4.9 kg or more, 5 kg or more, 5.2 kg or more, 5.4 kg or more, 5.6 kg or more, 5.8 kg or more, or kg or more, but the degree of weight gain as a criterion for changing the number of the food composition is provided, the period (week) providing the food composition, the number of times of the food composition is provided per day, etc. may vary according to the age, gender, weight, health condition, type and severity of disease, lifestyle of a subject or a prescriber's determination, and are not limited to the above range.

In one aspect of the present invention, the subject may include a subject exhibiting at least one disease selected from the group consisting of obesity, metabolic syndrome, non-alcoholic steatohepatitis, knee osteoarthritis, and diabetes, and specifically the subject may include a subject exhibiting at least one disease selected from the group consisting of obesity, metabolic syndrome, non-alcoholic steatohepatitis, knee osteoarthritis, and diabetes, requiring weight loss, and more specifically the subject may include a subject exhibiting at least one disease selected from the group consisting of obesity, metabolic syndrome, non-alcoholic steatohepatitis, knee osteoarthritis, and diabetes for which a weight loss regimen was prescribed.

In one aspect of the present invention, the food composition may be converted to a normal diet after reaching a target body weight, and the target body weight (ideal body weight), the transition point to the normal diet, and the specific composition of the normal diet may vary according to the age, gender, weight, health condition, type and severity of disease, lifestyle of a subject, or a prescriber's determination.

In another aspect, the present invention provides a method for providing diet information including providing information on the food composition according to one aspect of the present invention to a subject, wherein the information is that the calories of the composition provided per day per 1 kg of the subject's ideal body weight are 3 to 15 kcal. The description of the food composition, subject, etc. is as described above.

In one aspect of the present invention, the content and ratio of nutrients, specifically carbohydrates, proteins, lipids, muscle loss prevention nutrients, etc., of the composition provided to a subject may vary according to the calories of the composition provided per 1 kg of the subject's ideal body weight, or the age, gender, weight, health condition, type and severity of disease, lifestyle of the subject, or a prescriber's determination.

In another aspect, the present invention may relate to a diet program including providing a low-calorie protein food composition, wherein the food composition is packaged in one package unit, one package is composed of 20 to 400 kcal, and the food composition may contain 1.5 to 6 % by weight of carbohydrate, 15 to 66 % by weight of protein, and 1 to 2 % by weight of fat, based on the total weight of the composition.

In still another aspect, the present invention provides a method for providing a weight loss guideline to a subject in need of weight loss, the method may relate to a method for providing a weight loss guideline including providing a low-calorie protein food composition, wherein the food composition is packaged in one package unit, one package is composed of 20 to 400 kcal, and the food composition contains 1.5 to 6 % by weight of carbohydrate, 15 to 66 % by weight of protein, and 1 to 2 % by weight of fat, based on the total weight of the composition.

In still another aspect, the present invention may relate to a composition that is packaged in units of one package for weight loss, wherein one package is composed of 20 to 400 kcal, contains 1.5 to 6 % by weight of carbohydrate and 15 to 66 % of protein, and 1 to 2 % by weight of fat, based on the total weight of the composition.

Hereinafter, the present invention will be described in detail through examples. However, the following examples are for illustrative purposes only and it will be apparent to those of ordinary skill in the art that the scope of the present disclosure is not limited by the examples.

### [Example 1] Preparation of protein food composition with very-low calorie and high bioabsorption rate

As a food composition for providing to a subject in need of weight control, a food composition that was mixed with 200 ml (90 kcal) of low-fat milk or 200 ml (120 kcal) of soy milk and was provided so that the total energy intake per day was 600 to 800 kcal, divided into three to four times a day was prepared.

The food composition was packaged in one package unit, and was composed to have a calorific value of about 116 kcal (388.53 kcal/100g) of one package, of which the sodium content is 552.47 mg/100g, and the specific composition of the food composition is as follows .
- 3 major nutrients: carbohydrate 4.1 g, protein 22.9 g, lipid 0.93 g
- muscle loss prevention nutrient: vitamin D
- micronutrient: dietary fiber, vitamin and mineral blend powder (vitamin C, vitamin E, nicotinamide, vitamin B1, vitamin B6, zinc oxide, folic acid)

In this case, the protein includes 11 kinds of amino acids (histidine, isoleucine, leucine, lysine, methionine, cystine, phenylalanine, tyrosine, threonine, tryptophan and valine), and contains essential amino acids of 50 % or more, branched amino acids (valine, leucine, isoleucine) of 40 % based on the total amino acid content.

When a male with an ideal body weight (IBW) of 80 kg consumed 4 packages of the food composition prepared above mixed with low-fat milk or soy milk a day, a total of 830 to 950 kcal per day (55 g of carbohydrate, 116 g of protein, 12 to 32 g of lipid) was consumed, and a total of 466 kcal per day (16 g of carbohydrate, 92 g of protein, 4 g of fat) of very-low-calorie food was consumed with only the food composition. In this case, low-fat milk was calculated as 5 g of carbohydrate, 3 g of protein, and 1 g of fat per 100 ml, and soy milk was calculated as 4.5 g of carbohydrate, 3 g of protein, and 7 g of fat per 100 ml.

In addition, when a woman with a standard weight of 60 kg consumed 3 packages of the food composition prepared above a day, a total of 620 to 710 kcal per day (40 g of carbohydrate, 87 g of proteins, 9 to 24 g of lipid) was consumed, and a total of 349 kcal per day (12 g of carbohydrate, 69 g of protein, 3 g of fat) of very-low-calorie was consumed with only the food composition. In this case, low-fat milk was calculated as 5 g of carbohydrate, 3 g of protein, and 1 g of fat per 100 ml, and soy milk was calculated as 4.5 g of carbohydrate, 3 g of protein, and 7 g of fat per 100 ml.

### [Example 2] Diet program

The food composition prepared in Example 1 may be provided as a diet program including (1) weight loss phase and (2) weight maintenance phase. The following diet program may be applied to obese patients who need weight control, including diabetic patients. If they are taking drugs that cause hypoglycemia, have uncontrolled high blood pressure, have undergone surgery or treatments due to heart disease or brain disease within the last 6 months, have severe liver or kidney failure, have serious respiratory problems, have a pacemaker implanted, have alcohol-related problems, have uncontrolled depression, bipolar disorder, or schizophrenia, are currently taking medications that affect weight (steroids, hormones, etc.), or have an eating disorder, the diet program should not be applied. However, the following diet program must be conducted under the supervision and monitoring of a prescribing physician.

Specifically, in the (1) weight loss phase, the program shown in Table 1 below is applied to obese patients in need of weight control.

**[Table 1]**

| | 2^{nd} week | 3^{rd} to 6^{th} week | 7^{th} to 12^{th} week |
|---|---|---|---|
| Content | Three meals a day: food composition of Example 1 | Two meals a day: food composition of Example 1 One meal a day: normal diet | One meal a day: food composition of Example 1 Two meals a day: normal diet |

In addition, after performing the program of the (1) weight loss phase, in the (2) weight maintenance phase, two meals a day are provided with the food composition of Example 1 for a week per month, and during the (2) weight maintenance phase, if the body weight of a subject increases by 2 kg or more, two meals a day was provided with the food composition of Example 1 for 2 weeks per month, and if the body weight of a subject increases by 4 kg or more, two meals a day was provided with the food composition of Example 1 for 3 weeks per month.

Preparation examples of the composition according to an embodiment of the present invention will be described below, but this is only intended to be specifically described, not intended to limit the present invention. In addition, an amino acid score in the following preparation examples is a value obtained by dividing an individual amino acid/1g of protein in each preparation example by a reference value, which is amino acid/1g of protein, and is evaluated as a reference value (85 or more).

### [Example 3] Preparation of protein-supplemented very-low calorie food composition and implementation of a diet program

### [Example 3-1] Selection of participants for a diet program

Subjects satisfying the following criteria were selected as subjects to participate in the diet therapy according to one aspect of the present invention.

First, a case of obesity with a body mass index (weight/height² (kg/m²)) of 25 or more, or a case of a body mass index of 23 or more and a waist circumference of 90 cm or more for men or 85 cm or more for women were used as criteria. In addition, the following program was conducted for subjects whose participants or their representatives agreed to a study protocol and clinical follow-up and methods, and who agreed in writing to the consent form approved by the research review committee of a research institute.

However, subjects who met the following exclusion criteria were excluded.
- Subjects who are pregnant or currently breastfeeding
- Subjects who have taken medication for weight loss within 6 months of participating in the study or have participated in other weight loss programs
- Subjects who have had a surgical operation for weight loss
- Subjects who had a weight change of 3 kg or more within 6 months of participation in the study
- Subjects who are currently taking drugs that cause hypoglycemia, such as insulin or sulfonylurea
- Subjects who are taking a contraindicated drug, are taking a drug or food that can affect the body weight. Specifically, subjects who are taking anti-obesity drugs (orlistat, lorcaserin, liraglutide, phentermine, amphetamine, topiramate, bupropion, naltrexone), oral steroids, hormones, or health functional foods for weight control. However, subjects who are taking antidepressants, antipsychotics, antiepileptic drugs, antidiabetic drugs, and antihistamines, and have stable weight for at least 6 months were allowed to participate in the program.
- Subjects who are difficult to perform exercise evaluation and exercise prescription due to cardiovascular disease, cancer history, or surgery
- Subjects who are required to have treatment adjustment or hospitalization due to uncontrollable depression, bipolar disorder, or schizophrenia
- Subjects with an eating disorder such as bulimia or anorexia or binge eating disorder
- Subjects with an alcohol use disorder (drinking more than 4 days a week and drinking more than 7 drinks at a time for men /drinking more than 5 drinks at a time for women)
- Subjects whose glomerular filtration rate (eGFR), which reflects renal function, is 30 ml/min or less within 6 months of study participation
- Subjects who have gallstones or have visited the emergency room due to abdominal pain caused by gallstones

The information of a total of 68 subjects finally selected through the above process is shown in Table 2 below. Specifically, the average age was about 42 years old, and the female ratio was 70 % in both a test group (protein-supplemented very-low calorie (VLCD) diet group) and a control group (standard low-calorie (LC) diet group). The body mass index was about 31 on average in the test and control groups, and the body fat percentage was about 38% in the test group and 39% in the control group, and no significant differences were observed in other body composition and blood pressure.

**[Table 2]**

| Variable | Test group (n=36) | Control group (n=32) | P-value |
|---|---|---|---|
| Age (years) | 42.19 (10.80) | 43.03 (12.92) | 0.772 |
| Gender Female | 26 (72.2) | 23 (71.9) | |
| Height (cm) | 164.80 (9.09) | 164.61 (8.49) | 0.927 |
| Weight (kg) | 83.68 (16.00) | 85.33 (18.42) | 0.694 |
| Body mass index (kg/m²) | 30.67 (4.36) | 31.29 (5.05) | 0.588 |
| Waist circumference (cm) | 99.90 (9.44) | 99.50 (10.69) | 0.869 |
| Body fat percentage mass(%) | 38.46 (6.53) | 39.41 (5.98) | 0.536 |
| Fat mass (kg) | 32.35 (9.48) | 33.93 (10.21) | 0.51 |
| Muscle mass (kg) | 28.42 (6.33) | 28.45 (6.46) | 0.983 |
| Systolic blood pressure (mmHg) | 129.33 (18.84) | 126.66 (15.30) | 0.526 |
| Diastolic blood pressure (mmHg) | 82.28 (13.30) | 78.41 (9.46) | 0.176 |

### [Example 3-2] Preparation of food composition

As a food composition to be provided to a subject in need of weight control, the food composition that was provided by mixing with 200 ml (90 kcal) of low-fat milk or 200 ml (120 kcal) of soy milk so that a total daily intake was less than 900 kcal was prepared.

Specifically, the food composition is composed of 120 kcal per one package, 10 g of carbohydrate (3 %), 18 g of protein (33 %), 1 g of fat (2 %), and 160 mg of sodium (8 %), and its specific components and content are as follows:
Calcium casein (protein 94 %) 27 %, milk protein concentrate (protein 85 %) 19.5 %, whey protein concentrate (protein 80 %) 5.6 %, soy protein isolate (protein 90 %) 4 %, magnesium oxide (magnesium 60 %) 0.467 %, vitamin D3 mixture (containing vitamin D 0.25 %, sucrose 38 %, gum arabic 38 %, corn starch 15.55 %, medium chain triglyceride oil 7.5 %, silicon dioxide 0.5 %, vitamin D3 0.25 %, DL-alpha-tocopherol 0.2 % ) 0.0371 %, vitamin B6 hydrochloride (vitamin B6 82 %) 0.013 %, zinc oxide (zinc 80 %) 0.0111 %, dextrin 18.7214 %, vegetable cream powder (starch syrup 64 %, sunflower oil 30 %, sodium caseinate 3 %, potassium phosphate dibasic 1.7 %, potassium polyphosphate 0.5 %, glycerin fatty acid ester 0.35 %, silicon dioxide 0.3 %, sodium stearyl lactate 0.15 %) 10 %, fructose 5.4931 %, polydextrose 3 %, amino acid mixture (L-leucine 50 %, L -isoleucine 25 %, L-valine 25 %) 2.78%, milk flavor (synthetic flavor) 2 %, isomalt 1 %, xanthan gum 0.2 %, enzyme-treated stevia 0.1 %, saccharinus fruit extract powder 0.01 %, polygamma glutamic acid 0.01 %, lactic acid mycelium 0.01 %, soybean lecithin 0.01 %, vitamin C 0.01 %, nicotinic acid amide 0.01 %, vitamin E mixture {containing vitamin E 16.75%, DL-α-tocopheryl acetate 50 %, modified starch (starch sodium octenylsuccinate) 24.5 %, dextrin 24.5 %, silicon dioxide 1 %} 0.01 %, calcium pantothenate (pantothenic acid 91 %) 0.004 %, vitamin B1 hydrochloride (vitamin B1 78 %) 0.001 %, vitamin B2 0.001 %, biotin mixture (containing biotin 1 %, crystalline cellulose 98.9 %, biotin 1.1 %) 0.001 %, folic acid 0.0003 %. Total 100 %.

Compared to the very-low calorie ketogenic diet in Europe, although there is a difference in the content of carbohydrate in the food composition, a sufficient supply of protein can provide a feeling of fullness and reduce muscle loss as shown in Example 4 below. In addition, since the total calories are restricted, carbohydrate intake is restricted even in the food composition, but it is not a carbohydrate dose that induces ketosis, so it can be regarded as a protein-supplemented very-low calorie diet.

### [Example 3-3] Diet program

The food composition prepared in Example 3-2 was provided to the subjects selected in Example 3-1 through the following diet program.

In this case, it was conducted as a comparative clinical trial with a randomized control group, and after sufficiently this study was explained to participants who visited an outpatient clinic or an obesity clinic or had seen a promotional material, a consent to participate in the study was obtained from the participants, and the subjects deemed suitable by the researcher through the selection test were randomly assigned to either the test group or the control group, and participated in the following diet program for 12 months to receive follow-up management and evaluation. As for the randomization method, the Baseline covariate adaptive randomization method proposed by James (1998) was used in consideration of the implementing institution, gender, age, and body mass index stage, and 1: 1 progress was made with stratified block randomization considering gender, age, and body mass index.

The test group was provided with a diet that provided the food composition of Example 3-2 for all three meals a day for the first two weeks, and provided the food composition of Example 3-2 for two meals a day and recommended protein and vegetable intake through foods for the remaining one meal for the following six weeks. In this case, an very-low calorie diet of 900 kcal or less per day was continuously maintained for a period of 2 months, and protein was provided at 1 g/kg per an ideal body weight.

For the control group, a low-calorie diet education was conducted according to the standardized guidelines of the Korean Society for Obesity for 2 months. The control group was instructed to maintain a low-calorie diet of about 1500 to 1800 kcal for males and 1200 to 1500 kcal for females, and was encouraged to exercise to control their weight.

In both the test group and the control group, a nutritionist confirmed the degree of compliance with the diet about once or twice a week, educated and managed a meal evaluation, and the researchers confirmed the compliance with the diet therapy by a message once a week.

### [Example 4] Confirmation of changes in body composition and blood pressure

The height, weight, waist circumference, systolic blood pressure, and diastolic pressure at the start of the diet program in Example 3-3, at 2 weeks, and at 8 weeks of the test group and control group that had undergone the diet program according to Example 3-3 were measured, and body fat, lean body mass, and body fat percentage were measured and compared using the bioelectrical resistance analysis method (InBody 7.0) as follows.

### [Example 4-1] Statistical processing

For continuous variables, descriptive statistics were presented, and for categorical variables, frequencies and ratios were presented. All statistical tests were conducted at the significance level of 0.05 or less, and two-tailed tests were used.

For the test group and control group of 68 people of Example 3-3, gender, age, and initial body mass index were used as covariates for group comparison. Further, if the response variable does not satisfy the assumption of normality, it was performed after appropriate transformation using rank transformation, etc. In addition, the changes in body weight, body fat and muscle mass between the test group and the control group were analyzed by t-test.

### [Example 4-2] Measurement and comparison of changes in body composition and blood pressure

The results of measuring and comparing changes in body composition and blood pressure of the test group and control group participating in the diet program of Example 3-3 are shown in Table 3 below.

**[Table 3]**

| Variables | Test group (n=36) | Control group (n=32) | P-value |
|---|---|---|---|
| Weight (kg) | | | |
| Difference between start of program and 2^{nd} week | -4.05 (1.65) | -2.04 (1.54) | **<0.001** |
| Difference between start of program and 2^{nd} month | -7.25 (3.67) | -4.61 (3.16) | **0.013** |
| Body mass index (kg/m²) | | | |
| Difference between start of program and 2^{nd} week | -1.49 (0.63) | -0.75 (0.58) | **<0.001** |
| Difference between start of program and 2^{nd} month | -2.67 (1.40) | -1.66 (1.01) | **0.008** |
| Waist circumference (cm) | | | |
| Difference between start of program and 2^{nd} week | -3.47 (2.84) | -1.76 (1.88) | **0.008** |
| Difference between start of program and 2^{nd} month | -6.79 (3.50) | -4.29 (2.99) | **0.013** |
| Body fat percentage (%) | | | |
| Difference between start of program and 2^{nd} week | -0.52 (1.41) | -0.47 (1.30) | 0.902 |
| Difference between start of program and 2^{nd} month | -3.40 (2.36) | -2.00 (1.77) | **0.028** |
| Fat mass (kg) | | | |
| Difference between start of program and 2^{nd} week | -2.05 (1.47) | -1.23 (1.21) | **0.021** |
| Difference between start of program and 2^{nd} week | -5.30 (3.00) | -3.37 (2.34) | **0.02** |
| Muscle mass (kg) | | | |
| Difference between start of program and 2^{nd} week | -1.15 (1.05) | -0.46 (0.73) | **0.004** |
| Difference between start of program and 2^{nd} month | -1.21 (0.95) | -0.74 (0.77) | 0.073 |
| Systolic blood pressure (mmHg) | | | |
| Difference between start of program and 2^{nd} week | -10.66 (14.11) | -6.38 (13.45) | 0.232 |
| Difference between start of program and 2^{nd} month | -1.21 (0.95) | -0.74 (0.77) | 0.073 |
| Diastolic blood pressure (mmHg) | | | |
| Difference between start of program and 2^{nd} week | -7.42 (13.49) | -3.38 (13.45) | 0.073 |
| Difference between start of program and 2^{nd} month | -4.35 (12.82) | 4.00 (8.29) | **0.013** |

In the test group, the average weight was -7.25 kg (standard deviation of 3.67) at 2^{nd} month, and in the control group, the average weight was -4.61 kg (standard deviation of 3.16), indicating a significant decrease in weight in the test group (FIG. 1).

In addition, the change in muscle mass in the test group decreased by -1.15 kg (standard deviation of 1.05) at 2^{nd} week, and the change in muscle mass in the control group decreased by -0.46 kg (standard deviation of 0.73), so the muscle loss in the test group was greater. But at 2^{nd} month, the muscle loss in the test group compared to the initial test group was -1.21 kg (standard deviation of 0.95), and the muscle loss in the control group was -0.74 kg (standard deviation of 0.77), so no significant difference was observed, and there was no difference in the degree of muscle loss from the control group (FIG. 2). The body fat change in the test group was -5.30 kg (standard deviation of 3.0) at 2^{nd} month, showing a significant change compared to -3.37 kg (standard deviation of 2.34) in the control group (FIG. 2). In addition, the waist circumference and body mass index all showed significant decreases in the test group compared to the control group at 2^{nd} month.

As for the change in blood pressure, the decrease in the systolic blood pressure in the test group was -7.42 mmHg (standard deviation of 13.49) at 2^{nd} month, which tended to decrease compared to the change in the control group, -3.38 mmHg (standard deviation of 13.45), but no statistical significance was observed. The change in the diastolic blood pressure was also -4.35 mmHg (standard deviation of 12.82) at 2^{nd} month in the test group, and the control group showed a slight increase in the diastolic blood pressure (average increase of 4mmHg, standard deviation of 8.29), showing a significant blood pressure reduction effect.

The food composition and method for providing diet information according to one aspect of the present invention is not the diet that induces ketosis by ingesting carbohydrates of about 80 g for men and 60 g for women in the initial two-week stages consisting of a total of 800 kcal for men and 600 kcal for women, so it is different from the very-low calorie ketogenic diet in Europe. Compared to the European very-low calorie ketogenic diet, in the food composition and method for providing diet information according to one aspect of the present invention, strict control in that calorie restriction and protein supplementation are mainly managed, such as a similar very-low calorie diet, is conducted until the first two weeks. Thus, more flexible meal control and management are possible.

In addition, in the 2-month control using the food composition and method for providing diet information according to one aspect of the present invention, it was more effective in weight and body fat loss than the standardized low-calorie diet, and muscle loss showed little difference. Thus, it is expected that it can be implemented as one of the weight control methods that can be performed relatively safely on an outpatient basis because there are no cases of complaining of serious side effects.

### [Preparation Example 1]

According to the composition shown in Table 4 below, a food composition having a calorific value of 388.53 kcal/100g can be prepared by a commonly used method.

**[Table 4]**

| Category | Contents |
|---|---|
| Carbohydrate (%) | 13.73 % |
| Crude protein (%) | 76.45 % |
| Crude fat (%) | 3.09% |
| Sodium (mg/100g) | 552.47 mg/100g |
| Amino acid score (histidine) | 105 |
| Amino acid score (Isoleucine) | 143 |
| Amino acid score (Leucine) | 111 |
| Amino acid score (Lysine) | 101 |
| Amino acid score (Methionine + Cystine) | 70 |
| Amino acid score (Phenylalanine + Tyrosine) | 97 |
| Amino acid score (Threonine) | 122 |
| Amino acid score (Tryptophan) | 90 |
| Amino acid score (Valine) | 114 |
| Amino acid score | 70 |

### [Preparation 2]

According to the composition shown in Table 5 below, a food composition having a calorific value of 393.48 kcal/100g can be prepared by a commonly used method.

**[Table 5]**

| Category | Contents |
|---|---|
| Carbohydrate (%) | 32.12 % |
| Crude protein (%) | 59.59 % |
| Crude fat (%) | 2.96 % |
| Sodium (mg/100g) | 538.16 mg/100g |
| Amino acid score (Histidine) | 141 |
| Amino acid score (Isoleucine) | 198 |
| Amino acid score (Leucine) | 144 |
| Amino acid score (Lysine) | 132 |
| Amino acid score (Methionine + Cystine) | 92 |
| Amino acid score (Phenylalanine + Tyrosine) | 114 |
| Amino acid score (Threonine) | 163 |
| Amino acid score (Tryptophan) | 113 |
| Amino acid score (Valine) | 146 |
| Amino acid score | 92 |

### [Preparation Example 3]

According to the composition shown in Table 6 below, a food composition having a calorific value of 395.29 kcal/100g can be prepared by a commonly used method.

**[Table 6]**

| Category | Contents |
|---|---|
| Carbohydrate (%) | 34.60 % |
| Crude protein (%) | 57.18 % |
| Crude fat (%) | 3.13 % |
| Sodium (mg/100g) | 556.06 mg/100g |
| Amino acid score (Histidine) | 156 |
| Amino acid score (Isoleucine) | 216 |
| Amino acid score (Leucine) | 158 |
| Amino acid score (Lysine) | 148 |
| Amino acid score (Methionine + Cystine) | 97 |
| Amino acid score (Phenylalanine + Tyrosine) | 132 |
| Amino acid score (Threonine) | 175 |
| Amino acid score (Tryptophan) | 116 |
| Amino acid score (Valine) | 159 |
| Amino acid score | 97 |

### [Preparation Example 4]

According to the composition shown in Table 7 below, a food composition having a calorific value of 392.50 kcal/100g can be prepared by a commonly used method.

**[Table 7]**

| Category | Contents |
|---|---|
| Carbohydrate (%) | 29.87 % |
| Crude protein (%) | 61.82 % |
| Crude fat (%) | 2.86% |
| Sodium (mg/100g) | 567.78 mg/100g |
| Amino acid score (Histidine) | 147 |
| Amino acid score (Isoleucine) | 209 |
| Amino acid score (Leucine) | 152 |
| Amino acid score (Lysine) | 136 |
| Amino acid score (Methionine + Cystine) | 92 |
| Amino acid score (Phenylalanine + Tyrosine) | 131 |
| Amino acid score (Threonine) | 168 |
| Amino acid score (Tryptophan) | 110 |
| Amino acid score (Valine) | 152 |
| Amino acid score | 92 |

## Claims

1. A low-calorie protein food composition which is provided to a subject,
wherein the food composition is packaged in one package unit, the one package is composed of 20 to 400 kcal, and
wherein the food composition comprises 1.5 to 6 % by weight of carbohydrate, 15 to 66 % by weight of protein, and 1 to 2 % by weight of fat based on a total weight of the composition.

2. The low-calorie protein and high bioabsorption rate food composition according to claim 1,
wherein the food composition is an very-low calorie food that provides 3 to 15 kcal per day per 1 kg of the subject's ideal body weight,
wherein the food composition comprises a carbohydrate content of 0.13 to 0.3 g per 1 kg of the ideal body weight, a protein content of 0.76 to 1.725 g per 1 kg of the ideal body weight, a lipid content of 0.03 to 0.075 g per 1 kg of the ideal body weight,
wherein the protein contains 11 or more amino acids while containing an essential amino acid ratio of 50 % or more based on a total amino acid content, contains branched amino acids, and
wherein the food composition comprises vitamin D or omega 3 as a muscle loss prevention nutrient.

3. The composition according to claim 2,
wherein the composition further comprises beta hydroxymethylbutyrate (HMB) as the muscle loss prevention nutrient.

4. The composition according to claim 1,
wherein the composition further comprises one or more selected from the group consisting of a dietary fiber; and a mixture of other vitamins and minerals as a micronutrient.

5. The composition according to claim 4,
wherein the mixture of other vitamins and minerals is a mixture of one or more vitamins selected from the group consisting of vitamin C, vitamin E, nicotinic acid amide, vitamin B1, vitamin B6 and vitamin B12; and one or more minerals selected from the group consisting of zinc oxide and folic acid.

6. The composition according to claim 1,
wherein the low-calorie food is divided and provided 2 to 8 times a day.

7. The composition according to claim 2,
wherein the branched amino acid is one or more selected from the group consisting of valine, leucine and isoleucine.

8. The composition according to claim 2,
wherein a content of the branched amino acid is 25 to 65 % of the total amino acid content.

9. The composition according to claim 1,
wherein the food composition is provided in a (1) weight loss phase,
wherein in a case that the food composition consists of consecutive first and second periods, in the (1) weight loss phase, three meals a day are provided with the food composition during the first period, and two meals a day are provided with the food composition during the second period.

10. The composition according to claim 9,
wherein the first period and the second period are consecutive periods of periods from a start date of providing the food composition to any one week from 3^{rd} week to 32^{nd} week,
wherein the first period is from the start date of providing the food composition to any one week from 1^{st} week to 12^{th} week, and
wherein the second period is from a next day of an end date of the first period to any one week from 3^{rd} week to 32^{nd} week based on the start date of providing the food composition.

11. The composition according to claim 9,
wherein in the second period, a remaining meal of a day not providing the food composition is provided so that a total calorie intake per day is 1500 kcal or less and a protein intake per day is 2 g or less per 1 kg of an ideal body weight.

12. The composition according to claim 1,
wherein the food composition is provided in a (1) weight loss phase and a (2) weight maintenance ephase,
wherein in a case that the (1) weight loss phase consists of consecutive first, second and third periods, three meals a day are provided with the food composition during the first period, two meals a day are provided with the food composition during the second period, and one meal a day is provided with the food composition during the third period,
wherein in the (2) weight maintenance phase, two meals a month are provided with the food composition, and the (2) weight maintenance phase is for any one period of 1 to 24 months,
wherein the first period, the second period and the third period are consecutive periods from the start date of providing the food composition to any one week from 12^{th} week to 48^{th} week,
wherein the first period is from the start date of providing the food composition to any one week from 2^{nd} week to 12^{th} week,
wherein the second period is from a next day of an end date of the first period to any one week from 6^{th} week to 21^{st} week based on the start date of providing the food composition,
wherein the third period is from a next day of an end date of the second period to any one week from 12^{th} week to 48^{th} week based on the start date of providing the food composition.

13. The composition according to claim 12,
wherein in the (2) weight maintenance phase, if a body weight increases by 2 kg or more, two meals a day are provided with the food composition for 2 weeks per month, and if the body weight increases by 4 kg or more, two meals a day are provided with the food composition for 3 or 4 weeks per month.

14. The composition according to claim 9,
wherein the food composition is provided with low-fat milk or soy milk.

15. The composition according to claim 1,
wherein the composition is provided to the subject exhibiting one or more diseases selected from the group consisting of obesity, non-alcoholic steatohepatitis, metabolic syndrome, knee osteoarthritis, and diabetes.

16. The composition according to claim 1,
wherein the composition is converted to a normal diet after reaching a target body weight.

17. A method for providing diet information, comprising the step of providing information on the composition according to any one of claims 1 to 16 to a subject.

18. The method of claim 17,
wherein the information comprises that caloric content of the composition provided per day per 1 kg of the subject's ideal body weight is 3 to 15 kcal.
